# EUROPEAN PATENT APPLICATION

(11) **EP 2 026 210 A1**
(43) Date of publication of application: **18.02.2009**
(21) Application number: 07015999.1
(22) Date of filing: 14.08.2007
(51) Int. Cl.: G06F 11/273

(54) **Testing hardware configurations**

(71) Applicant: Harman Becker Automotive Systems GmbH, 76307 Karlsbad (DE)
(72) Inventor: Sengle, Ralf, 76307 Karlsbad (DE)
(74) Representative: Grünecker, Kinkeldey, Stockmair & Schwanhäusser Anwaltssozietät

(57) **Abstract**

The present invention relates method for testing a hardware configuration including a data processing unit and hardware components comprises the steps of: connecting a hardware testing apparatus with the hardware configuration by means of at least one interface; running first software on the hardware testing apparatus; running second software on the data processing unit of the hardware configuration; generating test data by the first software running on the hardware testing apparatus and transmitting the test data to the hardware configuration by means of the at least one interface; addressing one or more drivers for the hardware components of the hardware configuration by means of the second software based on the test data; and generating test result data in response to the test data by means of the second software running on the hardware configuration and transmitting the test result data to the hardware testing apparatus by means of the at least one interface.

## Description

### Field of Invention

The present invention relates to the testing of hardware devices. More particularly, the present invention relates to a testing of hardware devices by means of a computer system running a control software configured to communicate with software running on the hardware devices under test for testing these devices.

### Background of the invention

Testing is a crucial issue in the development and manufacture of hardware devices and hardware components of complex hardware configurations, e.g., audio and video communication systems, computers, etc. Usually some variety of hardware components and combinations is available when designing a new or build-to-order audio device or computer and it is of importance to test the operability and interaction efficiency and reliability of different hardware components during the design stage. When the designed product is to be manufactured quality control by testing of multiple hardware components constituting the product is desirable.

In the art, highly specific test tools have been developed to test particular hardware components. Usually a hardware device under test is provided with data that is specific for this device and the operation based on this data is monitored and analyzed. For instance, US 6,393,588 discloses an apparatus and software tool for testing the operation of a Universal Series Bus hub of a computer.

However, such specific software tools for testing particular hardware devices are very limited in application. As a result, a huge number of different software tools are necessary for testing complex hardware configurations. Maintenance and up-dating of libraries of software testing tools is therefore troublesome and also error-prone. In particular, the synergetic interaction of different hardware components is difficult to test by a variety of different specific software tools.

Therefore, there is a need for a more universal testing apparatus that allows for testing of hardware components during both the design and the manufacturing process that is easy to handle and that provides unique test results for individual hardware components operatively connected with other components in complex hardware architectures.

### Description of the Invention

The above-mentioned problem is solved by the method for testing a hardware configuration according to claim 1, the computer program product according to claim 5 and the hardware testing apparatus according to claim 6.

The claimed method for testing a hardware configuration including a data processing unit and hardware components comprises the steps of:
connecting a hardware testing apparatus with the hardware configuration by means of at least one interface;
running first software on the hardware testing apparatus;
running second software on the data processing unit of the hardware configuration;
generating test data by the first software running on the hardware testing apparatus and transmitting the test data to the hardware configuration by means of the at least one interface;
addressing one or more drivers for the hardware components of the hardware configuration by means of the second software based on the test data; and
generating test result data in response to the test data by means of the second software running on the hardware configuration and transmitting the test result data to the hardware testing apparatus by means of the at least one interface.

The hardware testing apparatus may be a personal computer (PC). The hardware configuration that is to be tested may include a CPU or a microcontroller on which the second software is loaded and run. Depending on the hardware configuration the second software includes one or more drivers and transfers the test data (as it is or after some processing) to the interface lines in order to address (operate) one or more of the hardware components. The generic drivers provided by the second software show only little dependence on connected hardware components thereby allowing testing of a great variety of hardware configurations.

The response of the hardware component(s) to the transferred test data may be represented by the test result data or by an additional command to read out a current state. Manual measurement might be required, if the hardware component does not support a feedback. The test data may comprise or consist of a command for setting a level of an input/output line (I/O line) high or low or for setting bytes in the memory or register to predetermined values. It is an advantage that test data comprising commands for hardware components connected with a microcontroller running the second software can usually be used for similar components in the context of different hardware configurations. The test result data may comprise or consist of a response that a command was executed, e.g., an I/O line was set high or low.

Typical drivers include input/output drivers, a memory access driver, an 12C driver, an SSC driver, an ATAPI driver, etc. If an I/O line is set to 1 or 0, e.g., corresponding to switch on or off a particular hardware component, the test result data comprises information that the I/O line was in fact set to the pre-defined level or that the level could not be set due to an error of the I/O driver.

The test result data is received by the hardware testing apparatus and can be displayed to a user. If the hardware component supports a feedback line or a register where the "on" state can be read out, test data can be generated to read the feedback line or the register. Otherwise a manual measurement of the real state can be done. Thus, failure of a hardware component can be immediately and readily identified.

By the disclosed method, a testing operator is enabled to generate a command for testing a hardware configuration, e.g., a command to switch-on voltage to a tuner. Each port pin of an I/O port connected to a microcontroller running the second software can be read as an input or set to 0 or 1 by a corresponding port command for reading and writing, respectively. In general, the testing operator knows about the reaction on levels applied to respective port pins and can, thus, generate the command for switching-on voltage to the tuner.

The testing operator is provided with information (by means of the above-mentioned test result data) that the command was executed, i.e. that the respective level was correctly set. Whether the tuner voltage was actually switched-on can be tested by means of a metering device or by an appropriate read command. Any specific adaptation to a hardware configuration under test is carried out by an appropriate setting of the PC (the first software).

It should be stressed that the disclosed method can be applied to both the development state of a new hardware design and the process of manufacturing of hardware devices.

According to an example in the above-mentioned method first test data and second test data different from the first test data is sequentially generated and the first test data is transmitted to a first driver of the hardware configuration that is supported by the second software and the second test data is transmitted to a second driver of the hardware configuration that is supported by the second software and that is different from the first driver of the hardware configuration.

Multiple hardware components connected with respective drivers can, thus, be tested subsequently after one single compilation of the first (testing) software. For instance, data can be transmitted from the hardware testing apparatus to the hardware configuration representing a command to switch on a power source supplying power to another hardware component of the hardware configuration. Subsequently, another command is transmitted to switch on the other hardware component. Failure of this hardware component (not switched-on) can readily be identified after correct operation of the power supply was verified.

According to another embodiment at least a first hardware component and a second hardware component different from the first one of the hardware configuration are subsequently connected with a same driver of the hardware configuration that is supported by the second software and test result data is generated when the first and the second hardware component is connected with the driver, respectively, in response to the same test data and the test result data is transmitted to the hardware testing apparatus.

Test data is transmitted to the hardware configuration and the driver is supplied with this data, e.g., representing some particular command. A response of a first hardware component connected with this driver is represented by the test result data generated by the second software running on the data processing unit of the hardware configuration under test. After operation of the first hardware, e.g., correct switching on, correct modification of volume, correct tuning, etc., has been reported to the hardware testing apparatus by means of the test result data transmitted via the interface, the above-mentioned second hardware component is connected with the same driver, e.g., an 12C driver, as in the case of the first hardware component.

Again, test data is transmitted from the hardware testing apparatus to the hardware configuration for testing the functionality of the second hardware component. The newly sent test data may be the same as the test dated generated and transmitted for testing the first hardware component. The second hardware component may be of the same type as the first one or may alternatively be of a different type. For instance, an input/output driver connected with the first/second hardware component may be provided with the test data, e.g., some predetermined signal level, and the first hardware component may be a tuner component and the second hardware component may be a CD drive or an EEPROM.

Operation of different hardware components can, therefore, be tested by the control signals (test data) transmitted from the hardware testing apparatus to the hardware configuration using the same drivers (e.g., I/O port drivers) despite the fact that the different hardware components, in general, need different data during actual operation in a practical application of the tested hardware configuration and are, in fact, tested with different test data (see also detailed description below). In general, different hardware components that make use of the same kind of interface (bus system) and that are incorporated in different test systems can be addressed by different test data via the same HHBIOS driver.

It might be preferred that the second software running on the data processing unit (e.g., a microcontroller) of the tested hardware configuration comprises a command interpreter for determining whether test data received from the hardware testing apparatus is valid and for generating an error code when invalid test data is determined.

Invalid data may represent an invalid command or data for addressing a hardware component that is presently not available in the tested hardware configuration. The error code indicates the user that the test data is not appropriate for testing the present hardware configuration and guarantees that an unexpected response of the hardware configuration on the test data that is represented by the test result data generated by the second software is not mistaken as a failure of one or more of the hardware components of the hardware configuration.

The claimed computer program product for testing a hardware configuration including a data processing unit and hardware components, comprises
a first software configured to run on a hardware testing apparatus and to generate test data to be transmitted to the hardware configuration; and
a second software configured to run on the data processing unit of the hardware configuration, to receive the test data and to transmit the test data to at least one driver connected with one of the hardware components and to generate test result data in response to the test data.

It is also provide a hardware testing apparatus for testing a hardware configuration, comprising
data processing unit configured to run a first software and to generate test data based on the run first software and to control a second software running on the hardware configuration by means of the first software; and
at least one data interface configured to be connected to at least one interface of a test hardware configuration for transfer of the test data and reception of test result data generated by the test hardware configuration by means of the second software running on the hardware configuration in response to the test data transferred by the data interface of the hardware testing apparatus.

Additional features and advantages of the present invention will be described with reference to the drawing. In the description, reference is made to the accompanying figure that is meant to illustrate an example of the invention. It is understood that this example does not represent the full scope of the invention.

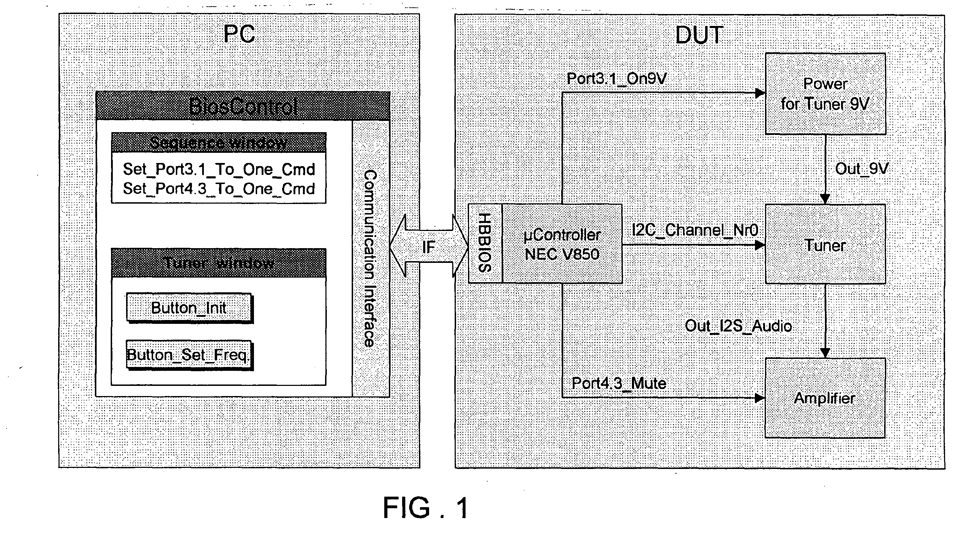

Figure 1 illustrates an example of the operation of a hardware testing apparatus.

In Figure 1 an example of the inventive testing is shown in which a tuner component is added in a hardware configuration and shall be tested. As shown in Figure 1 a PC can operate as a hardware testing apparatus for testing a hardware configuration (device under test, DUT). In the shown example, a testing software BiosControl is run on the PC. The PC comprises a processor, a chipset and a non-volatile memory including a BIOS. An interface is provided for connection with the DUT. The interface may, in principle, include bus slots, memory slots, drive slots, a parallel and a serial port, USB ports, wireless or otherwise input/output ports, etc.

The DUT comprises a microcontroller for running a software HBBIOS that is controlled by the BiosControl and that allows for communication with the PC via the interface (IF), e.g., via RS232. In the present, example the DUT has a usual NEC V850 microcontroller. The main loop program HHBIOS is configured to provide the functions of input/output ports (Port3.1_On9V; Port4.3_Mute) and an I2C driver (I2C_Channel_Nr0).

Moreover, HHBIOS has interface drivers that are configured to send data to an output buffer and then to the PC (BiosControl) and to receive data from the PC via an input buffer that stores commands from the BiosControl. The output buffer stores the responses of the drivers as, e.g., of the I2C driver.

In principle, a HHBIOS driver provides a particular operational functionality by means of a command. For example, in the case of an I/O port there exists a command to switch a pin of a microcontroller to input or output, respectively. The pin and the function Input/Output (as well as a function for setting a level to 0 or 1) are set by parameters included in the command. Thus, a port pin of the same controller used in different systems to be tested that make use of this controller can be set by the function and the parameters although the functional operation of the controller is, in general, different for each of the systems. Whereas test data, e.g., for setting some driver voltage, will be different for different devices, the same port driver can be used for the different devices without modification.

According to another example, a HHBIOS driver enables data transfer via the 12C protocol that secures that the clock and data transfer are performed in accordance with the 12C specifications. The data content of the data that is to be transferred is determined by the test system. The data can be addressed to multiple components connected with the 12C bus of the test system. The same HHBIOS driver can be used for different test systems, even if it has to be adapted to different port pins. The test data can be adapted to different test systems when using similar components that are connected with the 12C and incorporated in different test systems. If, e.g., test data are generated that represent a Play command of a CD drive of a particular test system that is controlled by an 12C, a similar CD drive controlled by the 12C of another test system can also be controlled by the same test data. In general, similar hardware components of different test systems can be tested by the same test data.

A command interpreter checks whether valid commands are available in the input buffer. Valid commands are transferred to the respective driver(s). If a command is not a valid one or refers to a driver that is not included in the hardware configuration that is presently tested, an error code is generated by the command interpreter and transmitted to the BiosControl running in the PC.

A tuner component is connected with the microcontroller by the 12C driver. The DUT also comprises a power source that can supply power to the tuner and an amplifier for amplifying an output signal of the tuner.

The BiosControl contains a library for several hardware components, e.g., tuners, amplifiers, RDS decoder, etc., and allows for an easy and fast design of hardware projects by means of this library (tool pool). In particular, the BiosControl provides communication with a user by means of a graphical user interface (using windows).

As mentioned above by means of a generic I/O port driver each port pin can be set to Input/Output or to a particular level (0 or 1). Test commands can be generated to switch a particular pin to output with level 1, for example. The function of this pin (muting or a particular volt value, etc.) is given by the hardware component (of a test system) under test. Actual test data are assigned to a particular function. Thus, setting a port to a particular level can be mapped to the functional operation (port command) to switch a particular hardware component to a predetermined voltage, for instance.

In the example shown in Figure 1, commands (Set_Port3.1_To_One_Cmd, Set_Port4.3_To_One_Cmd) have been generated in a sequence window that in turn may include a variety of generic commands. By Set_Port3.1_To_One_Cmd at controller port #3 the Bit #1 is set to the level High. The developer, e.g., knows that by setting this single output line to the level High a driving voltage of 9 V is switched on in a particular system under test. The effect of setting the Bit #1 at controller port #3 to the level High can be directly measured or derived from the operation of components of the system under test in response to the switched-on voltage. By the shown commands in a particular system, a tuner can be powered on and an amplifier can be muted, for instance.

In a different system a different operational function could be connected with Bit #1 at controller port #3 that nevertheless would be set to High by the same test data used in the previous particular system for switching-on the 9 V driving voltage.

The commands, i.e. the contents of the sequence window, are transmitted from the BiosControl to the HBBIOS. Operation of the DUT (response to the commands) can be monitored by the BiosControl on the basis of data transmitted by HBBIOS via the interface (IF). A control window running on the PC can be provided for logging the data transfer between BiosControl and HBBIOS.

The graphical user interface provides the user with a tuner window for controlling operation of the tuner component under test by means of click buttons (Button_Init, Button_Set_Freq.). By clicking (by means of a computer mouse) the button Button_Init the user can init the tuner and by clicking the button Button_Set_Freq the channel of the tuner can be set.

A user (hardware developer) is, thus, enabled to test a hardware configuration click by click, i.e. sequentially for different hardware components. After each click a response of the DUT can be shown and logged. HHBIOS transmits data to BiosControl in response to each command. Consider a case in that correct operation of the power source and the amplifier was already verified. If the command Set_Port3.1_To_One_Cmd does not result in activation of the tuner, power reception of the tuner exhibits a failure.

Since dependencies between different hardware components (power source, tuner, amplifier) are represented by single unique commands, the user can readily identify failures of the tested hardware configuration at the respective point of operation and can immediately start consecutive measurements in order to analyze the already isolated problem in some detail. In addition, if erroneously some port was set to a wrong level (e.g., high instead of low), this can easily be realized by the user and corrected without re-compilation of the entire testing software.

It is noted that all previously discussed embodiments are not intended as limitations but serve as examples illustrating features and advantages of the invention. It is to be understood that some or all of the above described features can also be combined in different ways.

## Claims

1. Method for testing a hardware configuration including a data processing unit and hardware components comprising the steps of:
connecting a hardware testing apparatus with the hardware configuration by means of at least one interface;
running first software on the hardware testing apparatus;
running second software on the data processing unit of the hardware configuration;
generating test data by the first software running on the hardware testing apparatus and transmitting the test data to the hardware configuration by means of the at least one interface;
addressing one or more drivers for the hardware components of the hardware configuration by means of the second software based on the test data;
and
generating test result data in response to the test data by means of the second software running on the hardware configuration and transmitting the test result data to the hardware testing apparatus by means of the at least one interface.

2. Method according to claim 1, wherein first test data and second test data different from the first test data is sequentially generated and the first test data is transmitted to a first driver of the hardware configuration that is supported by the second software and the second test data is transmitted to a second driver of the hardware configuration that is supported by the second software and that is different from the first driver of the hardware configuration.

3. Method according to claim 1 or 2, wherein at least a first hardware component and a second hardware component different from the first one of the hardware configuration are subsequently connected with a same driver of the hardware configuration that is supported by the second software and test result data is generated when the first and the second hardware component is connected with the driver, respectively, in response to the same test data and the test result data is transmitted to the hardware testing apparatus.

4. Method according to one of the preceding claims, wherein the second software comprises a command interpreter for determining whether test data received from the hardware testing apparatus is valid and for generating an error code when invalid test data is determined.

5. Computer program product for testing a hardware configuration including a data processing unit and hardware components, comprising
a first software configured to run on a hardware testing apparatus and to generate test data to be transmitted to the hardware configuration; and
a second software configured to run on the data processing unit of the hardware configuration, to receive the test data and to transmit the test data to at least one driver connected with one of the hardware components and to generate test result data in response to the test data.

6. Hardware testing apparatus for testing a hardware configuration, comprising
data processing unit configured to run a first software and to generate test data based on the run first software and to control a second software running on the hardware configuration by means of the first software; and
at least one data interface configured to be connected to at least one interface of a test hardware configuration for transfer of the test data and reception of test result data generated by the test hardware configuration by means of the second software running on the hardware configuration in response to the test data transferred by the data interface of the hardware testing apparatus.
